# EUROPEAN PATENT APPLICATION

(11) **EP 3 444 608 A1**
(43) Date of publication of application: **20.02.2019**
(21) Application number: 16898614.9
(22) Date of filing: 13.04.2016
(51) Int. Cl.: G01N 30/86

(54) **DATA PROCESSING DEVICE AND DATA PROCESSING METHOD**

(71) Applicant: Shimadzu Corporation, Kyoto 604-8511 (JP)
(72) Inventor: SUGIMOTO, Shinji, Kyoto-shi Kyoto 604-8511 (JP)
(74) Representative: Mewburn Ellis LLP
(86) International application number: PCT/JP2016/061914
(87) International publication number: WO 2017/179154

(57) **Abstract**

When a peak in a chromatogram is automatically detected by an automatic waveform processing unit 143 and a user thereafter performs a manual operation on the peak, a manual waveform processing unit 144 changes peak information on the peak. A time difference calculation unit 147 calculates an elution time difference between peaks of the same component in two pieces of analyzed data. A peak selection unit 146 selects, for the target data, a peak of the same component as the peak in the analyzed data based on analysis dates and times, namely the sequence of generation dates and times of the pieces of chromatogram data. Based on the elution time difference and the analysis dates and times, a peak information reflection unit 148 reflects the change, made in peak information 134 on the peak in the analyzed data, in peak information 134 on the peak selected in the target data. Therefore, the peak information 134 on the peak in the target data can be automatically changed without depending on the manual operation. Further, it is possible to accurately change the peak information 134 on the peak in the target data.

## Description

### TECHNICAL FIELD

The present invention relates to a data processing device and a data processing method for automatically performing waveform processing on chromatogram data.

### BACKGROUND ART

At the time of performing chromatographic analysis, there has been used data processing device that automatically performs waveform processing.

Such a data processing device performs, for example, processing to detect a peak in chromatogram data or some other processing as the waveform processing. Specifically, the data processing device detects a start point and an end point of a peak in chromatogram data to recognize (detect) a waveform from the start point to the end point as the peak. The data processing device then creates a baseline connecting the start point and the end point of the peak and calculates an area of a region surrounded by the baseline and the peak. In the data processing device, such processing is performed automatically (e.g., see Patent Document 1 below).

In the case of using such a data processing device, the result of the processing by the data processing device may be different from the content thereof desired by a user. For example, there are cases where the start point and the end point of the peak are detected deviating from the original positions of those points. In this case, the user changes (corrects) by a manual operation the start point and the end point of the peak while confirming a chromatogram displayed on a display unit or the like. The user then performs analysis based on the correct peak after the change.

### PRIOR ART DOCUMENT

### PATENT DOCUMENT

Patent Document 1: Japanese Unexamined Patent Application Publication No. 2004-271422

### SUMMARY OF THE INVENTION

### PROBLEMS TO BE SOLVED BY THE INVENTION

In the conventional data processing device as described above, the user's work may be complicated. Specifically, when an analysis operation is performed a plurality of times in succession, it repeatedly occurs that the start point and the end point of the peak is detected deviating from the appropriate positions thereof in the chromatogram. Then, the user needs to change by the manual operation the start point and the end point of the peak for each chromatogram.

In such a case, it is considered that the content of the change in the peak (peak information) by the manual operation on a certain chromatogram is directly used for another chromatogram to omit the user's manual operation on another chromatogram. For example, in a case where a peak of the same component is detected from each of a plurality of chromatograms, when the peak is detected taking the times of the start point and the end point of the peak in the chromatogram after correction by the manual operation as the times of the start point and the end point of the peak in another chromatogram, it is possible to omit the manual operation by the user on another chromatogram.

However, when the analysis operation is performed repeatedly (when chromatogram data is generated continuously), even though each peak is the peak of the same component, individual deviation occurs in peak elution time in each chromatogram due to the presence of residues of the previous analysis in a column or some other reason. As a result, even though each peak is the peak of the same component, the times of the start point and the end point of the peak differ among each chromatogram, and there arises a problem that the peak cannot be detected accurately.

The present invention has been made in consideration of the above circumstances, and it is an object of the present invention to provide a data processing device and a data processing method capable of improving the efficiency of work for automatically correcting waveform-processed data and accurately performing the correction.

### MEANS FOR SOLVING THE PROBLEMS

(1) A data processing device of the present invention processes three or more pieces of chromatogram data with different analysis dates and times, obtained by repeatedly performing chromatographic analysis on samples containing the same component. The data processing device includes an automatic waveform processing unit, a manual waveform processing unit, a time difference calculation unit, a peak selection unit, and a peak information reflection unit. The automatic waveform processing unit that automatically detects a peak for each of the three or more pieces of chromatogram data. The manual waveform processing unit that changes peak information on the peak detected by the automatic waveform processing unit based on a manual operation by a user. The time difference calculation unit that takes, as analyzed data, two pieces of chromatogram data each having peak information on each of peaks of the same component, changed by the manual waveform processing unit, and calculates an elution time difference between the peaks of the same component in the two pieces of analyzed data. The peak selection unit selects, for a piece of target data among the three or more pieces of chromatogram data excluding the two pieces of analyzed data, a peak of the same component as the peak with the peak information changed by the manual waveform processing unit, based on analysis dates and times. The peak information reflection unit that reflects the change, made in the peak information on the peak in the analyzed data, in the peak information on the peak in the target data selected by the peak selection unit, based on the elution time difference calculated by the time difference calculation unit and the analysis dates and times.
   With such a configuration, when the peak in the chromatogram is automatically detected by the automatic waveform processing unit and the user thereafter performs the manual operation on the peak, the manual waveform processing unit changes the peak information on the peak. Then, the peak information reflection unit reflects the content of the changed peak information in peak information on the peak in another chromatogram data (target data).
   Therefore, the peak information on the peak in the target data can be automatically changed without the manual operation.
   As a result, it is possible to improve the efficiency of work to correct the target data.
   The time difference calculation unit calculates the elution time difference between the peaks of the same component in the two pieces of analyzed data. The peak selection unit that selects, for the target data, a peak of the same component as the peak in the analyzed data based on the analysis dates and times (the sequence of analysis dates and times), namely the sequence of generation dates and times of the pieces of chromatogram data. Based on the elution time difference and the analysis dates and times (the sequence of the analysis dates and times), the peak information reflection unit reflects the change, made in the peak information on the peak in the analyzed data, in peak information on the peak selected in the target data.
   Namely, in the data processing device, first, for the target data, the peak of the same component as the peak of the analyzed data is selected accurately. Then, in the data processing device, based on the elution time difference between the peaks of the same component in the two pieces of analyzed data and the analysis dates and times (the sequence of the analysis dates and times), the content of the change in the peak information on the analyzed data is reflected in the peak information on the selected peak in consideration of the deviation of the elution time of the peak for each chromatogram. It is thus possible to accurately change the peak information on the peak on the target data (correction of the target data).
   As described above, according to the data processing device of the present invention, it is possible to improve the efficiency of work for automatically correcting waveform-processed data and to perform the correction accurately.
(2) Further, the data processing device may further include a display processing unit. The display processing unit displays the analyzed data and the target data in accordance with the sequence of the analysis dates and times.
   With such a configuration, the user can confirm the peak position of the peak of the same component in the analyzed data and the target data in association with the sequence of the analysis dates and times.
   It is thus possible to easily confirm the relationship between the sequence of the analysis dates and times and the deviation of the peak positions.
(3) The display processing unit displays at least a peak position in data with an immediately previous analysis date and time and a peak position in data with an immediately subsequent analysis date and time in association with the peaks of the same component in the analyzed data and the target data.
   With such a configuration, concerning the peak of the same component, the user can confirm the peak position in a certain data by comparing with the peak positions in data with the immediately previous analysis date and time and data with the immediately subsequent analysis date and time.
(4) The data processing device may further include a time range specification unit. The time range specification unit specifies a time range in the analyzed data. The peak selection unit selects a peak of the same component as the peak with the peak information changed by the manual waveform processing unit, based on the time range specified by the time range specification unit and the analysis date and time.
   With such a configuration, by specifying the time range by the time range setting unit, it is possible to change the peak information only on a specific component.
   Hence it is possible to reduce the overall processing time.
(5) A data processing method of the present invention processes three or more pieces of chromatogram data with different analysis dates and times, obtained by repeatedly performing chromatographic analysis on samples containing the same component. The data processing method includes an automatic waveform processing step, a manual waveform processing step, a time difference calculation step, a peak selection step, and a peak information reflection step. In the automatic waveform processing step, peaks are automatically detected for each of the three or more pieces of chromatogram data. In the manual waveform processing step, peak information on the peak detected by the automatic waveform processing step is changed based on a manual operation by a user. In the time difference calculation step, two pieces of chromatogram data each having peak information on each of peaks of the same component, changed by the manual waveform processing step, are taken as analyzed data and an elution time difference between the peaks of the same component in the two pieces of analyzed data is calculated. In the peak selection step, for a piece of target data among the three or more pieces of chromatogram data excluding the two pieces of analyzed data, a peak of the same component as the peak with the peak information changed by the manual waveform processing step is selected based on analysis dates and times. In the peak information reflection step, the change made in the peak information on the peak in the analyzed data is reflected in the peak information on the peak in the target data selected by the peak selection step, based on the elution time difference calculated by the time difference calculation step and the analysis dates and times.
(6) Further, the data processing method may further include a display processing step. The display processing step displays the analyzed data and the target data in accordance with the sequence of the analysis dates and times.
(7) In the display processing step, at least a peak position in data with an immediately previous analysis date and time and a peak position in data with an immediately subsequent analysis date and time are displayed in association with the peaks of the same component in the analyzed data and the target data.
(8) The data processing method may further include a time range specification step. In the time range specification step, a time range in the analyzed data is specified. In the peak selection step, a peak of the same component as the peak with the peak information changed by the manual waveform processing step is selected based on the time range specified by the time range specification step and the analysis dates and times.

### EFFECTS OF THE INVENTION

According to the present invention, the peak information on the peak in the target data can be automatically changed without the manual operation. Further, based on the elution time difference between the peaks of the same component in the two pieces of analyzed data and the analysis dates and times, the peak information on the peak in the target data can be changed in consideration of the deviation of the elution time of the peak for each chromatogram which occurs in the case of performing continuous analysis. Therefore, it is possible to improve the efficiency of work for automatically correcting waveform-processed data and to perform the correction accurately.

### BRIEF DESCRIPTION OF THE DRAWINGS

FIG. 1 is a schematic view showing a configuration example of a data processing device according to an embodiment of the present invention and a gas chromatograph used together with the data processing device.
FIG. 2 is a block diagram showing a specific configuration of a control unit of the data processing device of FIG. 1 and peripheral members of the control device.
FIG. 3 is a flowchart showing an example of processing by the control unit.
FIG. 4 is a schematic view showing an example of a display form of a display screen and a display example at the time of displaying chromatograms on which automatic waveform processing has been performed.
FIG. 5 is a schematic view showing an example of the display form of the display screen and a display example at the time when manual waveform processing is performed on the chromatogram.
FIG. 6 is a schematic view showing an example of the display form of the display screen and a display example at the time of displaying the analyzed data and the target data.
FIG. 7 is a schematic view showing an example of the display form of the display screen and a display example at the time of displaying analyzed data and target data in which peak information has been reflected.

### MODE FOR CARRYING OUT THE INVENTION

### 1. Overall configuration of gas chromatograph

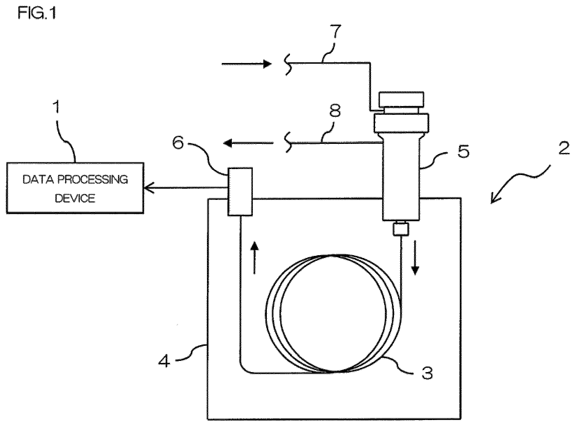

FIG. 1 is a schematic view showing a configuration example of a data processing device 1 according to an embodiment of the present invention and a gas chromatograph 2 used together with the data processing device.

The data processing device 1 is a device for performing various kinds of data processing on data obtained by the gas chromatograph 2. The data processing device 1 is constituted by, for example, a computer. A detailed configuration of the data processing device 1 will be described later.

The gas chromatograph 2 is for performing analysis by supplying a sample gas into a column 3 together with a carrier gas and includes a column oven 4, a sample introduction unit 5, a detector 6, and the like in addition to the column 3.

The column 3 is made up of, for example, a capillary column. The column 3 is accommodated in the column oven 4 together with a heater, a fan, and the like (none is shown).

The column oven 4 is for heating the column 3 and appropriately drives the heater and the fan at the time of analysis.

The sample introduction unit 5 is for introducing a carrier gas and the sample gas into the column 3, and on the inside thereof, a sample vaporization chamber (not shown) is formed. In this sample vaporization chamber, a liquid sample is injected, and a sample vaporized in the sample vaporization chamber is introduced into the column 3 together with the carrier gas. Further, a gas supply flow path 7 and a split flow path 8 communicate with the sample vaporization chamber.

The gas supply flow path 7 is a flow path for supplying the carrier gas into the sample vaporization chamber of the sample introduction unit 5.

The split flow path 8 is a flow path for discharging a part of the gas (a mixed gas of the carrier gas and the sample gas) in the sample vaporization chamber at a predetermined split ratio at the time of introducing the carrier gas and the sample gas into the column 3 by a split introduction method.

The detector 6 is made up of, for example, a hydrogen flame ionization detector (FID) or a flame photometric intensity detector (FPD). The detector 6 sequentially detects each sample component contained in the carrier gas introduced from the column 3.

At the time of measuring the sample in the gas chromatograph 2, a sample to be analyzed is injected into the sample introduction unit 5. The sample is vaporized in the sample vaporization chamber. Further, the carrier gas is supplied into the sample vaporization chamber of the sample introduction unit 5 via the gas supply flow path 7.

The sample vaporized in the sample vaporization chamber is introduced into the column 3 together with the carrier gas. Each sample component contained in the sample is separated in the process of passing through the column 3 and sequentially introduced into the detector 6.

In the detector 6, each sample component contained in the carrier gas introduced from the column 3 is detected sequentially. Further, a detection signal from the detector 6 is input into the data processing device 1.

In the data processing device 1, a chromatogram is generated based on the input signal. A user then confirms the obtained chromatogram and performs various analyzes.

### 2. Specific configuration of control unit and peripheral members.

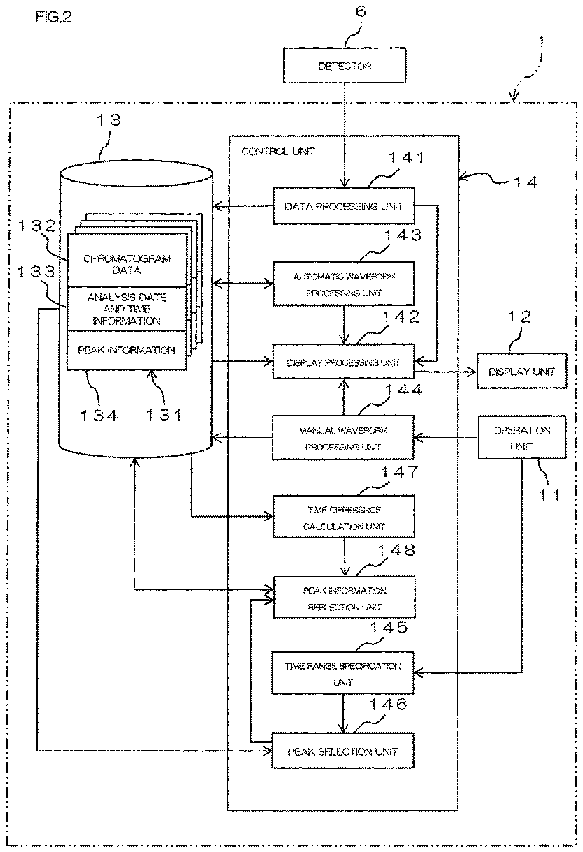

FIG. 2 is a block diagram showing a specific configuration of a control unit 14 of the data processing device 1 and peripheral members of the control unit 14.

The data processing device 1 includes an operation unit 11, a display unit 12, a storage unit 13, and the control unit 14.

The operation unit 11 is made up of, for example, a keyboard and a mouse. By operating the operation unit 11, the user can input various pieces of information such as analysis conditions into the control unit 14.

The display unit 12 is made up of, for example, a liquid crystal display. Various pieces of information such as analysis results are displayed on the display unit 12 under the control of the control unit 14.

The storage unit 13 is made up of, for example, a read only memory (ROM), a random access memory (RAM), and a hard disk. The storage unit 13 stores a plurality of pieces of detection data 131. Each of the pieces of detection data 131 is data on a chromatogram generated by the data processing device 1. The pieces of detection data 131 include chromatogram data 132, analysis date and time information 133, and peak information 134. The chromatogram data 132, the analysis date and time information 133, and the peak information 134 are associated with each other.

The chromatogram data 132 is data (chromatogram data) of a chromatogram generated by a data processing unit 141, described later, based on a detection signal from the detector 6.

The analysis date and time information 133 is a date and time at which the chromatogram data 132 was generated, specifically, a date and time at which the detection signal was output by the detector 6.

The peak information 134 is information on a peak in the chromatogram represented by the chromatogram data 132. Specifically, the peak information 134 includes information of a peak start point, a peak end point, and a peak position in the chromatogram. The information on the start point of the peak is information on a time of the start point of the peak, the information on the end point of the peak is information on a time of the end point of the peak, and the information on the peak position is information on a time of the highest point (peak top) of the peak.

The control unit 14 has a configuration including, for example, a central processing unit (CPU). The control unit 14 can cause an electric signal to be input or output among the operation unit 11, the display unit 12, and the detector 6. The control unit 14 stores information into the storage unit 13 and reads the information stored in the storage unit 13 as necessary. By the CPU executing a program, the control unit 14 functions as a data processing unit 141, a display processing unit 142, an automatic waveform processing unit 143, a manual waveform processing unit 144, a time range specification unit 145, a peak selection unit 146, a time difference calculation unit 147, a peak information reflection unit 148, and the like.

The data processing unit 141 obtains a chromatogram based on a detection signal from the detector 6. Data of the chromatogram generated by the data processing unit 141 is stored into the storage unit 13 as chromatogram data 132. Information on the date and time at which the detection signal was output from the detector 6 is stored as the analysis date and time information 133 into the storage unit 13 in association with the chromatogram data 132.

The display processing unit 142 performs processing to cause the display unit 12 to display the generated chromatogram in real time. namely, when the chromatogram is generated by the data processing unit 141, as described above, the data is stored as the chromatogram data 132 into the storage unit 13 and the chromatogram is displayed on the display unit 12 in real time.

The automatic waveform processing unit 143 performs processing to automatically detect a peak in a chromatogram represented by the chromatogram data 132 stored in the storage unit 13. Specifically, the storage unit 13 stores a plurality of peak detecting parameters (not shown). The automatic waveform processing unit 143 then performs processing to automatically detect a waveform of a portion satisfying the parameters as the peak in the chromatogram. Examples of the parameters include a parameter for detecting the start point of the peak, a parameter for detecting the end point of the peak, and a parameter for detecting the peak position (the position of the peak top). namely, the automatic waveform processing unit 143 automatically detects the start point of the peak, the end point of the peak, and the peak position in the chromatogram. Further, the information on the peak (information on the start point of the peak, the end point of the peak, and information on the peak position) detected by the automatic waveform processing unit 143 is stored into the storage unit 13 as the peak information 134.

The manual waveform processing unit 144 accepts a change (correction) on the peak in the chromatogram based on the operation of the operation unit 11 by the user, which will be described in detail later. Moreover, the manual waveform processing unit 144 rewrites the peak information 134 stored in the storage unit 13 based on the accepted content.

In addition to the above processing, the display processing unit 142 performs processing to cause the display unit 12 to display the peak in the chromatogram detected by the automatic waveform processing unit 143. Further, the display processing unit 142 performs processing to correct and display the peak in the chromatogram displayed on the display unit 12 based on the content accepted by the manual waveform processing unit 144.

The time range specification unit 145 accepts specification of a time range at the time of automatically correcting (reflecting) the peak information 134, based on the operation of the operation unit 11 by the user, which will be described in detail later.

Based on the analysis date and time information 133 stored in the storage unit 13 and the time range accepted by the time range specification unit 145, the peak selection unit 146 selects the peak to be automatically corrected in the chromatogram represented by the chromatogram data 132.

The time difference calculation unit 147 calculates an elution time difference of peaks based on two pieces of peak information 134 after the content is rewritten by the manual waveform processing unit 144, which will be described in detail later.

The peak information reflection unit 148 reflects the content of the peak information 134, changed by the manual waveform processing unit 144, in the peak information 134 on the peak (peak to be corrected) in the chromatogram selected by the peak selection unit 146, based on the analysis date and time information 133 stored in the storage unit 13 and the elution time difference of the peaks calculated by the time difference calculation unit 147, which will be described in detail later.

In addition to the above processing, the display processing unit 142 performs processing to correct and display the peak in the chromatogram based on the peak information 134 after being changed by the peak information reflection unit 147.

### 3. Control operation by control unit and display form of the display screen

### (1) Automatic waveform processing

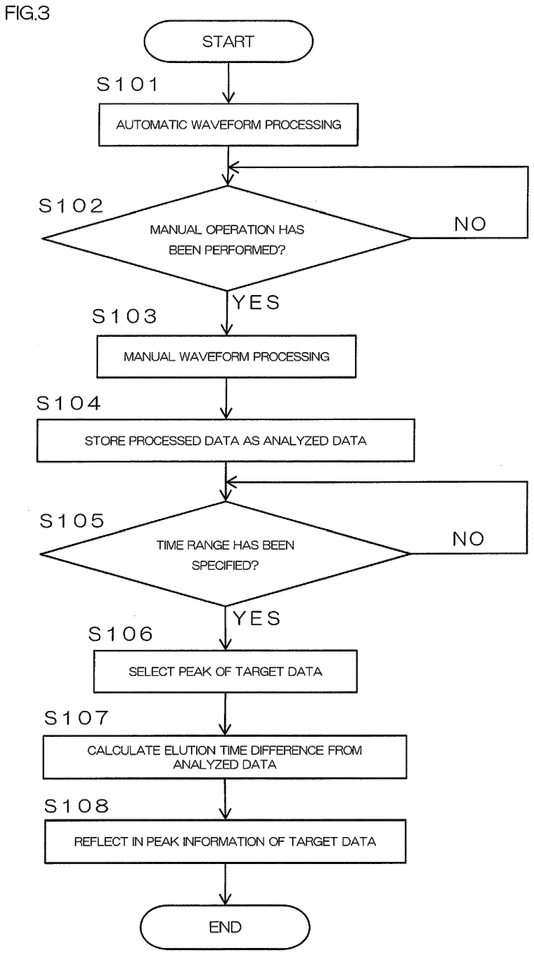

FIG. 3 is a flowchart showing an example of processing by the control unit 14.

When the analysis operation is started in the data processing device 1 and the gas chromatograph 2, the data processing unit 141 (cf. FIG. 2) generates a chromatogram based on a detection signal from the detector 6. Although not shown, the chromatogram is displayed on the display unit 12 in real time. Further, the generated chromatogram data is stored into the storage unit 13 as the detection data 131 (chromatogram data 132 and analysis date and time information 133). In this example, a description will be given assuming that the analysis operation (chromatographic analysis) is performed four times, with different analysis dates and times, on samples containing the same component.

Then, when the user operates the operation unit 11 and an operation for automatic waveform processing is performed, the automatic waveform processing unit 143 reads four pieces of detection data 131 stored in the storage unit 13 (chromatogram data 132 and analysis date and time information 133). Further, the automatic waveform processing unit 143 reads a parameter (not shown) from the storage unit 13 and detects a waveform portion satisfying the parameter as a peak in a chromatogram represented by each piece of chromatogram data 132 (step S101: automatic waveform processing step). The display processing unit 142 then displays the peak in the chromatogram detected by the automatic waveform processing unit 143 on the display screen 121.

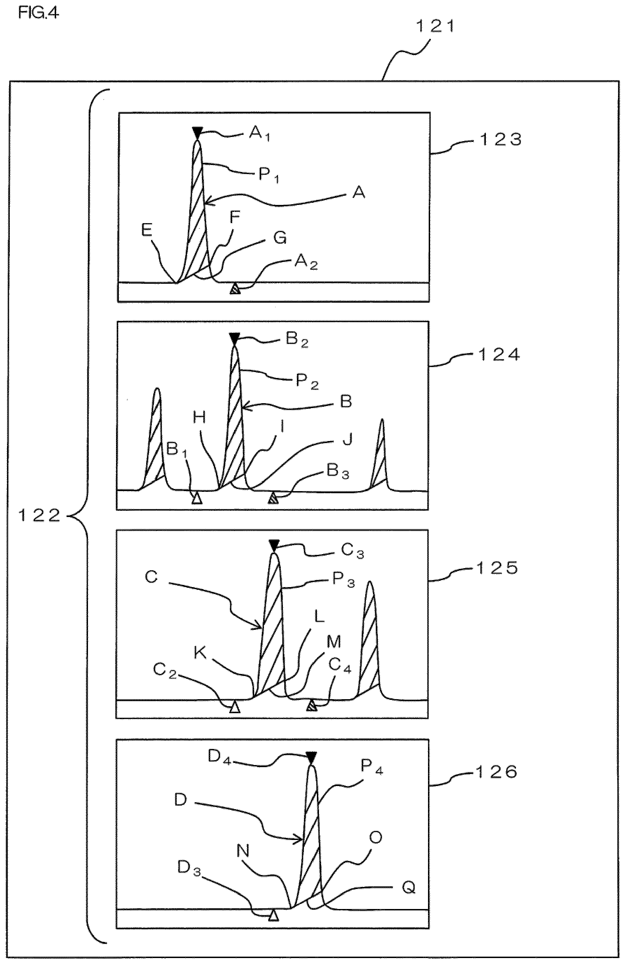

FIG. 4 is a schematic view showing an example of a display form of the display screen 121 and a display example at the time of displaying the chromatograms on which the automatic waveform processing has been performed.

The display unit 12 (cf. FIG. 2) described above includes the display screen 121.

When the automatic waveform processing is performed, a plurality of chromatogram regions 122 are displayed on the display screen 121 of the display unit 12. The chromatogram region 122 is a region for displaying a chromatogram after a peak is detected by the automatic waveform processing. In this example, a first chromatogram region 123, a second chromatogram region 124, a third chromatogram region 125, and a fourth chromatogram region 126 are displayed as the chromatogram regions 122 on the display screen 121. In each of the first chromatogram region 123 to the fourth chromatogram region 126, a horizontal axis represents time and a vertical axis represents signal intensity.

The first chromatogram region 123, the second chromatogram region 124, the third chromatogram region 125, and the fourth chromatogram region 126 are arranged in this sequence so as to be vertically arrayed in the display unit 12 from the upper side to the lower side.

In this example, the content of the chromatogram data 132 (a chromatogram represented by the chromatogram data 132) associated with the analysis date and time information 133 which is a first in the sequence of the analysis dates and times (date and time at which the data was generated) is displayed in the first chromatogram region 123. The chromatogram data 132 associated with the analysis date and time information 133 which is a second in the sequence of the analysis dates and times is displayed in the second chromatogram region 124. The chromatogram data 132 associated with the analysis date and time information 133 which is a third in the sequence of the analysis dates and times is displayed in the third chromatogram region 125. The chromatogram data 132 associated with the analysis date and time information 133 which is a fourth in the sequence of the analysis dates and times is displayed in the fourth chromatogram region 126. Specifically, in each of the first chromatogram region 123 to the fourth chromatogram region 126, each of the chromatograms A to D is displayed, and a peak detected by the automatic waveform processing unit 143 is displayed.

In this manner, on the display screen 121, the chromatograms are displayed in accordance with the sequence of the generation dates and times (in accordance with the sequence of the analysis dates and times) such that the chromatogram displayed in the chromatogram region 122 arranged on the upper side has an earlier generation date and time and the chromatogram displayed in the chromatogram region 122 arranged on the lower side has a later generation date and time.

Specifically, in the first chromatogram region 123, a baseline G connecting a point E and a point F is displayed on a chromatogram A, so that the point E is represented as the start point of the peak, the point F is represented as the end point of the peak, and a waveform between the one end (point E) of the baseline G and the other end (point F) thereof is represented as a peak P₁.

In the second chromatogram region 124, a baseline J connecting a point H and a point I is displayed on a chromatogram B, so that the point H is represented as the start point of the peak, the point I is represented as the end point of the peak, and a waveform between the one end (point H) of the baseline J and the other end (point I) thereof is represented as a peak P₂.

In the third chromatogram region 125, a baseline M connecting a point K and a point L is displayed on a chromatogram C, so that the point K is represented as the start point of the peak, the point L is represented as the end point of the peak, and a waveform between one end (point K) of the baseline M and the other end (point L) thereof is represented as a peak P₃.

In the fourth chromatogram region 126, a baseline Q connecting a point N and a point O is displayed on a chromatogram D, so that the point N is represented as the start point of the peak, the point O is represented as the end point of the peak, and a waveform between one end (point N) of the baseline Q and the other end (point O) thereof is represented as a peak P₄.

The peaks P₁ to P₄ in the chromatograms A to D displayed in the first chromatogram region 123 to the fourth chromatogram region 126 represent the same component

Information (the time of the peak start point, the time of the peak end point, the information time of the peak position) on each of the peaks P₁ to P₄ in the chromatograms A to D is stored into the storage unit 13 as the peak information 134.

In each chromatogram region 122, the peak position (peak top position) of each peak is indicated by an arrow, and the peak position of the peak in the chromatogram with an immediately previous generation date and time and the peak position of the peak in the chromatogram with an immediately subsequent generation date and time, with respect to the generation date and time (analysis date and time) of the chromatogram being displayed, are indicated by arrows.

Specifically, in the first chromatogram region 123, the peak position of the peak P₁ in the chromatogram A is indicated by an arrow A₁, and the peak position of the peak P₂ in the chromatogram B with the generation date and time immediately after the generation date and time of the chromatogram A is indicated by an arrow A₂. In the second chromatogram region 124, the peak position of the peak P₂ in the chromatogram B is indicated by an arrow B₂, the peak position of the peak P₁ in the chromatogram A with the generation date and time immediately before the generation date and time in the chromatogram B is indicated by an arrow B₁, and the peak position of the peak P₃ in the chromatogram C with the generation date and time immediately after the generation date and time of the chromatogram B is indicated by an arrow B₃. In the third chromatogram region 125, the peak position of the peak P₃ in the chromatogram C is indicated by an arrow C₃, the peak position of the peak P₂ in the chromatogram B with the generation date and time immediately before the generation date and time in the chromatogram C is indicated by an arrow C₂, and the peak position of the peak P₄ in the chromatogram D with the generation date and time immediately after the generation date and time of the chromatogram C is indicated by an arrow C₄. In the fourth chromatogram region 126, the peak position of the peak P₄ in the chromatogram D is indicated by an arrow D₄, and the peak position of the peak P₃ in the chromatogram C with the generation date and time immediately before the generation date and time of the chromatogram D is indicated by an arrow D₃.

In the chromatogram region 122, the peaks P₁ to P₄ in the chromatograms A to D are peaks representing the same component, but the chromatogram with the peak at the later analysis date and time (the chromatogram displayed in the chromatogram region 122 arranged on the lower side) is displayed further on the right side, namely, at the later point in time. Further, in the chromatogram region 122, each time the analysis date and time comes later, the peak of the same component in the chromatogram appears to be delayed by substantially the same time.

This is due to the fact that residues of the previous analysis are present in the column 3 when the chromatographic analysis is continuously performed in the data processing device 1, or some other reason. Therefore, in the present embodiment, the peak in each chromatogram is automatically corrected as follows.

### (2) Peak information reflection processing

On the display screen 121, in each of the peaks P₁ to P₄ in the chromatograms A to D, its end point is detected at a point in time prior to a point in time at which the inclination becomes horizontal in the chromatogram. Hence the user corrects by the manual operation the peak in the chromatogram on which the automatic waveform processing has been performed. At this time, the user selects two chromatograms displayed in the chromatogram region 122 and corrects the peak for each of the selected chromatograms by the manual operation (YES in step S102 of FIG. 3). In this example, the user corrects by the manual operation the chromatogram A displayed in the first chromatogram region 123 and the chromatogram C displayed in the third chromatogram region 125.

Specifically, when correcting the peak in the chromatogram by the manual operation, the user first selects the chromatogram region 122 (cf. FIG. 4) in which the chromatogram to be corrected is displayed.

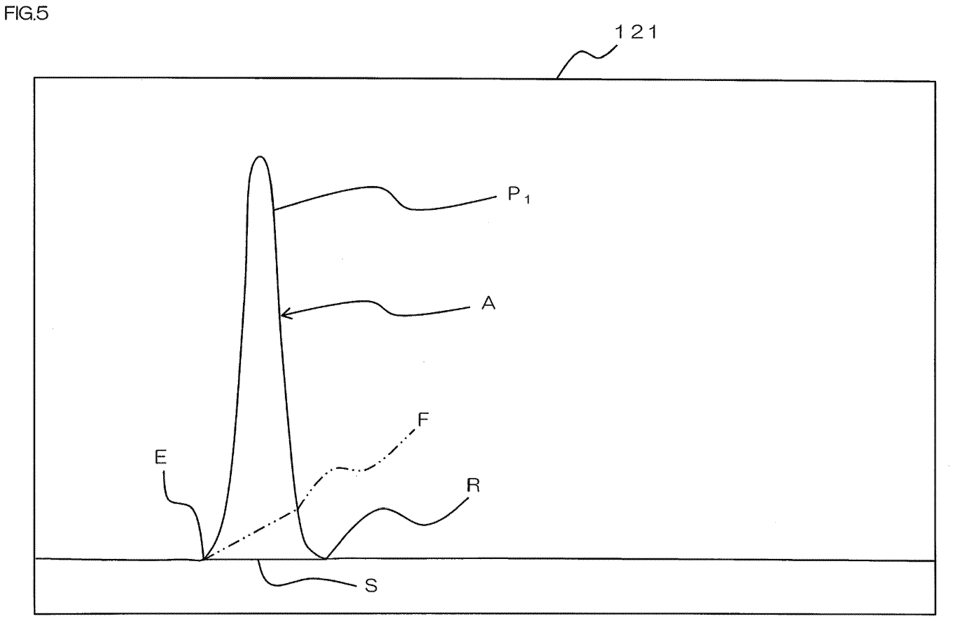

FIG. 5 is a schematic view showing an example of the display form of the display screen 121 and a display example at the time when the manual waveform processing is performed on the chromatogram A.

A description will be given here exemplifying a case where the user selects the first chromatogram region 123.

When the first chromatogram region 123 is specified by the operation of the operation unit 11 by the user, the display processing unit 142 enlarges and displays the chromatogram A in the first chromatogram region 123 on the display screen 121. In this state, the user selects (specifies) a point R on the graph A after selecting the end point F by, for example, a drag operation.

Then, the manual waveform processing unit 144 accepts the specification by the user and performs processing to change the end point of the peak P₁ from the point F to the point R in the chromatogram A (step S103 in FIG. 3: manual waveform processing step). Further, the display processing unit 142 displays a baseline S connecting the start point E of the peak and an end point R of the peak after the change. At this time, the information of the changed peak P₁ (information on the time of the end point R of a new peak) is overwritten in the storage unit 13 as new peak information 134. Then, in the storage unit 13, the chromatogram data 132 associated with this new peak information 134 is stored as analyzed data (step S104 in FIG. 3). In the storage unit 13, data except for the analyzed data among the pieces of chromatogram data 132 is taken as target data.

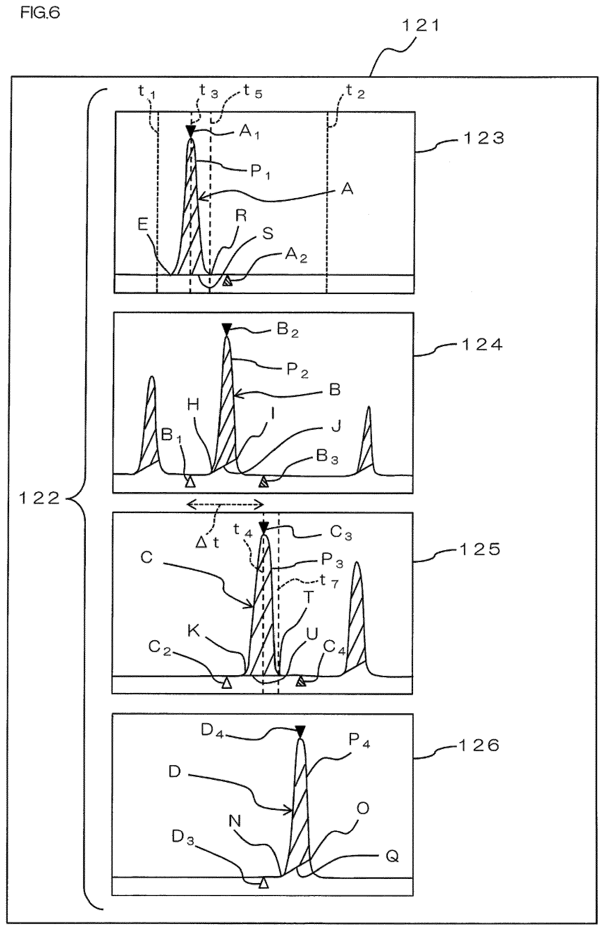

Then, when the manual operation by the user is completed, as shown in FIG. 6, the display processing unit 142 again displays each chromatogram region 122 on the display screen 121. At this time, the display processing unit 142 displays the chromatogram A including the peak P₁ after the change in the first chromatogram region 123 (display processing step).

FIG. 6 is a schematic view showing an example of the display form of the display screen 121 and a display example at the time of displaying analyzed data and target data.

In this example, the user specifies the third chromatogram region 125 and corrects the peak P₃ in the chromatogram C in the same manner as the manual operation on the first chromatogram region 123 described above. As a result, in the third chromatogram region 125, a baseline U connecting the start point K of the peak and an end point T of a new peak is displayed in the chromatogram C. In addition, the information on the peak is overwritten in the storage unit 13 as new peak information 134. Then, in the storage unit 13, the chromatogram data 132 associated with this new peak information 134 is stored as analyzed data. In this state, as in the case shown in FIG. 4, in each chromatogram region 122, the peak position of the peak in the chromatogram to be analyzed is indicated by an arrow. Further, in each chromatogram region 122, the peak position in the chromatogram with the immediately previous analysis date and time and the peak position in the chromatogram with the immediately subsequent analysis date and time, the positions being positions of the peaks of the same component as the above peak, are indicated by arrows so as to be associated with the peak to be analyzed.

In this manner, in the chromatogram regions 122 of the display screen 121, the chromatogram (chromatogram corresponding to the analyzed data) in which the information on the peak has been changed by the manual operation by the user and the chromatogram (chromatogram corresponding to the target data) on which only the automatic waveform processing has been performed are displayed. Specifically, in FIG. 6, the chromatograms A, C corresponding to the analyzed data are displayed in the first chromatogram region 123 and the third chromatogram region 125, and the chromatograms B, D corresponding to the target data are displayed in the second chromatogram region 124 and the fourth chromatogram region 126. In addition, these are arranged so as to be vertically aligned in accordance with the sequence of the analysis dates and times.

From this state, the user operates the operation unit 11 to reflect the content of the peak information 134 in the analyzed data in the peak information 134 of the target data. Specifically, the user operates the operation unit 11 to set a time range in the analyzed data. In this example, the user sets a time t₁ and a time t₂ in the first chromatogram region 123. The time range specification unit 145 then specifies the set time range, namely, from the time t₁ to the time t₂ (YES in step S105 in FIG. 3: time range specification step).

Based on the time range specified by the time range specification unit 145 and the sequence of the analysis dates and times of the chromatograms displayed in the respective chromatogram regions 122 (the sequence of the generation dates and times of the chromatograms), the peak selection unit 146 selects the peak in the target data (step S106 in FIG. 3: peak selection step).

Specifically, the peak selection unit 146 selects the chromatogram B with the analysis date and time immediately after those of the chromatogram A among the chromatograms of the target data, and selects the peak P₂ located at the time closest to the time of the peak P₁ in the chromatogram A (the peak the content of which has been changed by the manual waveform processing unit 144 and which is included in the specified time range) as the peak of the same component as the peak P₁. Further, the peak selection unit 146 selects the chromatogram D with the analysis date and time immediately after those of the chromatogram C among the chromatograms of the target data, and selects the peak P₄ located at the time closest to the time of the peak P₁ in the chromatogram A (the peak the content of which has been changed by the manual waveform processing unit 144 and which is included in the specified time range) as the peak of the same component as the peak P₁.

The time difference calculation unit 147 then calculates an elution time difference between the peaks of the same component in the two pieces of analyzed data (step S107 in FIG. 3: time difference calculation step).

Specifically, the time difference calculation unit 147 calculates an elution time difference Δt between the time (the time indicated by the arrow A₁) t₃ of the peak position of the chromatogram A displayed in the first chromatogram region 123 and the time (the time indicated by the arrow C₃) t₄ of the peak position of the chromatogram C displayed in the third chromatogram region 125.

Further, based on the elution time difference Δt calculated by the time difference calculation unit 147 and the sequence of the analysis dates and times of the chromatograms displayed in the respective chromatogram regions 122 (the sequence of the generation dates and times of the chromatograms), the peak information reflection unit 148 reflects the content of the peak information in the analyzed data in the peak information on the target data selected by the peak selection unit 146 (step S108 of FIG. 3: peak information reflection step).

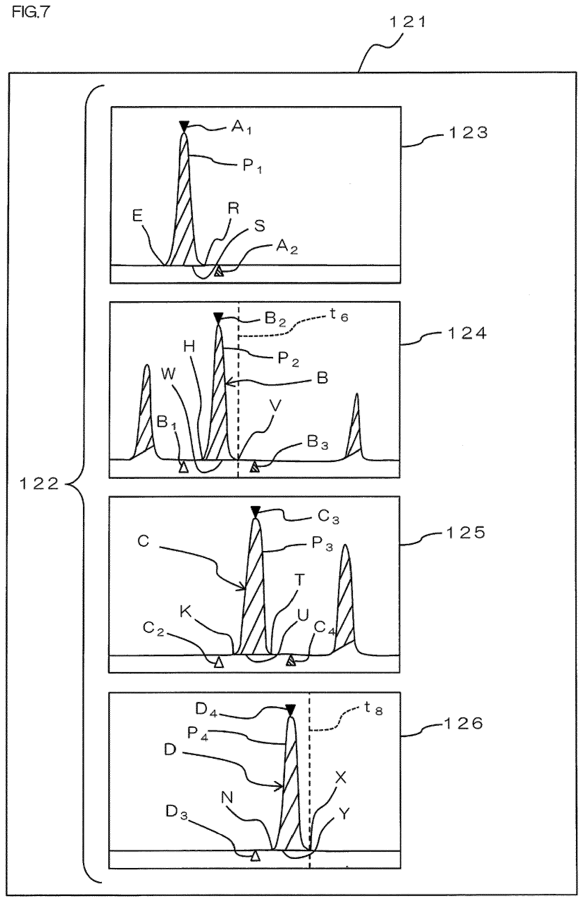

FIG. 7 is a schematic view showing an example of the display form of the display screen 121 and a display example at the time of displaying the target data in which the peak information of the analyzed data has been reflected.

In the chromatogram region 122, the peak of the same component is delayed by the same time each time the analysis date and time of the chromatogram comes later, so that the peak information reflection unit 148 reflects the peak information as follows.

Specifically, in the second chromatogram region 124, the peak information reflection unit 148 sets a time obtained by adding a half of the elution time difference Δt to t₅, which is the time of the end point R of the peak in the chromatogram A, as t₆ and sets a point corresponding to this time t₆ as a new end point V in the chromatogram B. Then, in the second chromatogram region 124, the display processing unit 142 displays a baseline W connecting the peak start point H and the end point V of a new peak.

This is based on that the analysis date and time of the chromatogram A which is one piece of analyzed data is a first one, the analysis date and time of the chromatogram C which is the other piece of analyzed data is a third one, and the analysis date and time of the chromatogram B which includes the peak P₂ selected by the peak selection unit 146 is a second one. Therefore, for example, when the analysis date and time of the one piece of analyzed data is the first one and the analysis date and time of the other piece of analyzed data is the second, the time added to the end point of the peak of the target data is not a half of the elution time difference Δt but the elution time difference Δt itself.

Further, in the fourth chromatogram region 126, the peak information reflection unit 148 sets a time obtained by adding a half of the elution time difference Δt to t₇, which is the time of the end point T of the peak in the chromatogram C, as t₈ and sets a point corresponding to this time t₈ as a new end point X in the chromatogram D. Then, in the fourth chromatogram region 126, the display processing unit 142 displays a baseline Y connecting the start point N of the peak and the end point X of a new peak.

This is based on that the analysis date and time of the chromatogram D including the peak P₄ selected by the peak selection unit 146 is the analysis date and time immediately after those of the chromatogram C which is the analyzed data.

As described above, in the data processing device 1, the elution time difference Δt of two pieces of analyzed data is calculated, and based on the sequence of the analysis dates and times of the chromatograms, the processing to shift the time on the peak of the analyzed data by the time based on the elution time difference Δt, so that the content of the change in the peak information 134 in the analyzed data is reflected in the peak information 134 of the target data.

### 4. Effects

(1) In the present embodiment, when the peak in the chromatogram represented by each chromatogram data 132 is automatically detected by the automatic waveform processing unit 143 (automatic waveform processing step) and thereafter the user performs a manual operation on the peak, the manual waveform processing unit 144 changes information on the peak (peak information) (manual waveform processing step). The changed information is overwritten as new peak information 134 in the storage unit 13. Then, the peak information reflection unit 148 reflects the content of the changed peak information 134 in the peak information 134 on the peak of another chromatogram data (target data) (peak information reflection step).
   Therefore, the peak information 134 on the peak in the target data can be automatically changed without depending on the manual operation.
   As a result, it is possible to improve the efficiency of work to correct the target data.
   The time difference calculation unit 147 calculates the elution time difference Δt between the peaks of the same component in the two pieces of analyzed data (time difference calculation step). The peak selection unit 146 selects, for the target data, a peak of the same component as the peak (peak P₁ of the chromatogram A) in the analyzed data based on the analysis dates and times (the sequence of the analysis dates and times), namely the sequence of the generation dates and times of the pieces of chromatogram data (Peak selection step). Based on the elution time difference Δt and the analysis dates and times (the sequence of the analysis dates and times), the peak information reflection unit 148 reflects the change, made in the peak information 134 on each of the peaks in the analyzed data, in the peak information 134 on the peak selected in the target data (peak information reflection step).
   That is, in the data processing device 1, first, the peak selection unit 146 correctly selects the peak of the same component as the peak of the analyzed data (the peak P₁ of the chromatogram A) for the target data. Then, in the data processing device 1, based on the elution time difference Δt between the peaks of the same component in the two pieces of analyzed data and the analysis dates and times (the sequence of the analysis dates and times), the content (information on the time of a new peak) of the change in the peak information 134 in the analyzed data is reflected in the peak information 134 on the selected peak in consideration of the deviation of the elution time of the peak for each chromatogram.
   It is thus possible to accurately change the peak information 134 on the peak on the target data (correction of the target data).
   As described above, according to the data processing device 1 and the data processing method of the present embodiment, it is possible to improve the efficiency of work for automatically correcting waveform-processed data (peak) and to perform the correction accurately.
(2) Further, in the present embodiment, the display processing unit 142 displays the chromatogram (chromatogram corresponding to the analyzed data) in which the information on the peak has been changed by the manual operation by the user and the chromatogram (chromatogram corresponding to the target data) on which only the automatic waveform processing has been performed, on the display screen 121 so as to be vertically aligned in accordance with the sequence of the analysis dates and times (display processing step).
   Therefore, the user can confirm the peak positions of peaks of the same component in the respective chromatograms in association with the sequence of the analysis dates and times.
   As a result, it is possible to easily confirm the relationship between the sequence of the analysis dates and times and the deviation of the peak positions.
(3) Further, in the present embodiment, the display processing unit 142 shows peak positions of peaks of chromatograms to be analyzed in each chromatogram region 122 with arrows. Further, in each chromatogram region 122, the display processing unit 142 indicates the peak position in the chromatogram with the immediately previous analysis date and time and the peak position in the chromatogram with the immediately subsequent analysis date and time, the positions being positions of the peaks of the same component as the above peak with arrows, so as to be associated with the peak to be analyzed.
   Therefore, the user can confirm the peak position in certain data with respect to the peak of the same component by comparing the peak positions in the data with immediately previous analysis date and time and the data with immediately subsequent analysis date and time.
(4) Further, in the present embodiment, the time range specification unit 145 specifies the time range in the analyzed data. The peak selection unit 146 selects the peak of the same component as the peak, on which the peak information 134 has been changed, based on the time range specified by the time range specification unit 145 and the analysis date and time.

Therefore, by specifying the time range by the time range specification unit 145, it is possible to change the peak information 134 only on a specific component.

Hence it is possible to reduce the overall processing time.

### 5. Modification

It has been described above that the data processing device 1 is used together with the gas chromatograph 2. However, the data processing device 1 can be used together with devices other than the gas chromatograph (GC). For example, the data processing device 1 can be used together with a liquid chromatograph (LC) or the like.

Further, it has been described above that the user changes the end point of the peak in the chromatogram by the manual operation. However, it is also possible for the user to change another information (peak information) with respect to the peak in the chromatogram. The peak information reflection unit 148 can also reflect the content of another peak information changed by the user in the peak information of another chromatogram. For example, the user can change the start point and the peak position of the peak in the chromatogram by the manual operation. Then, the peak information reflection unit 148 can also reflect the information on the changed start point and peak position of the peak in the peak information of another chromatogram.

Further, it has been described above that the number of target data is assumed to be two. However, the number of target data may be three or more.

### DESCRIPTION OF REFERENCE SIGNS

- 1: data processing device
- 14: control unit
- 131: detection data
- 132: chromatogram data
- 134: peak information
- 141: data processing unit
- 142: display processing unit
- 143: automatic waveform processing unit
- 144: manual waveform processing unit
- 145: time range specification unit
- 146: peak selection unit
- 147: time difference calculation unit
- 148: peak information reflection unit

## Claims

1. A data processing device for processing three or more pieces of chromatogram data with different analysis dates and times, obtained by repeatedly performing chromatographic analysis on samples containing the same component, the device comprising:
an automatic waveform processing unit that automatically detects a peak for each of the three or more pieces of chromatogram data;
a manual waveform processing unit that changes peak information on the peak detected by the automatic waveform processing unit based on a manual operation by a user;
a time difference calculation unit that takes, as analyzed data, two pieces of chromatogram data each having peak information on each of peaks of the same component, changed by the manual waveform processing unit, and calculates an elution time difference between the peaks of the same component in the two pieces of analyzed data;
a peak selection unit that selects, for a piece of target data among the three or more pieces of chromatogram data excluding the two pieces of analyzed data, a peak of the same component as the peak with the peak information changed by the manual waveform processing unit, based on analysis dates and times; and
a peak information reflection unit that reflects the change, made in the peak information on the peak in the analyzed data, in the peak information on the peak in the target data selected by the peak selection unit, based on the elution time difference calculated by the time difference calculation unit and the analysis dates and times.

2. The data processing device according to claim 1, further comprising a display processing unit that displays the analyzed data and the target data in accordance with a sequence of the analysis dates and times.

3. The data processing device according to claim 2, wherein the display processing unit displays at least a peak position in data with an immediately previous analysis date and time and a peak position in a data with an immediately subsequent analysis date and time in association with the peaks of the same component in the analyzed data and the target data.

4. The data processing device according to claim 1, further comprising a time range specification unit that specifies a time range in the analyzed data,
wherein the peak selection unit selects a peak of the same component as the peak with the peak information changed by the manual waveform processing unit, based on the time range specified by the time range specification unit and the analysis dates and times.

5. A data processing method for processing three or more pieces of chromatogram data with different analysis dates and times, obtained by repeatedly performing chromatographic analysis on samples containing the same component, the method comprising:
an automatic waveform processing step of automatically detecting a peak for each of the three or more pieces of chromatogram data;
a manual waveform processing step of changing peak information on the peak detected by the automatic waveform processing step based on a manual operation by a user;
a time difference calculation step of taking, as analyzed data, two pieces of chromatogram data each having the peak information on each of peaks of the same component, changed by the manual waveform processing step, and calculating an elution time difference between the peaks of the same component in the two pieces of analyzed data;
a peak selection step of selecting, for a piece of target data among the three or more pieces of chromatogram data excluding the two pieces of analyzed data, a peak of the same component as the peak with the peak information changed by the manual waveform processing step, based on analysis dates and times; and
a peak information reflection step of reflecting the change, made in the peak information on the peak in the analyzed data, in the peak information on the peak in the target data selected by the peak selection step based on the elution time difference calculated by the time difference calculation step and the analysis dates and times.

6. The data processing method according to claim 5, further comprising a display processing step of displaying the analyzed data and the target data in accordance with a sequence of the analysis dates and times.

7. The data processing method according to claim 6, wherein in the display processing step, at least a peak position in data with an immediately previous analysis date and time and a peak position in data with an immediately subsequent analysis date and time are displayed in association with the peaks of the same component in the analyzed data and the target data.

8. The data processing method according to claim 5, further comprising a time range specification step of specifying a time range in the analyzed data,
wherein in the peak selection step, a peak of the same component as the peak with the peak information changed by the manual waveform processing step is selected based on the time range specified by the time range specification step and the analysis dates and times.
